# EUROPÄISCHE PATENTSCHRIFT

(11) **EP 0 925 631 B1**
(45) Veröffentlichungstag und Bekanntmachung des Hinweises auf die Patenterteilung: **24.04.2002**
(21) Anmeldenummer: 97942915.6
(22) Anmeldetag: 12.09.1997
(51) Int. Cl.: H02K 7/10, F16H 57/02

(54) **ADAPTERSYSTEM**
INTERMEDIATE SYSTEM
SYSTEME INTERMEDIAIRE

(30) Priorität: 13.09.1996 DE 19637361
(43) Veröffentlichungstag der Anmeldung: 30.06.1999
(73) Patentinhaber: SEW-EURODRIVE GMBH & CO., D-76646 Bruchsal (DE)
(72) Erfinder: ZIMMERMANN, Heinrich, D-68753 Waghäusel (DE); OBERLÄNDER, Günter, D-76703 Kraichtal (DE); MENSING, Norbert, D-76689 Karlsdorf-Neuthard (DE)
(74) Vertreter: Bohnenberger, Johannes, Dr.
(86) Internationale Anmeldenummer: EP9704988
(87) Internationale Veröffentlichungsnummer: WO9811651

(56) Entgegenhaltungen:
- EP-A- 0 567 048
- FR-A- 2 231 145
- FR-A- 2 237 524
- FR-A- 2 245 113
- US-A- 2 526 964
- US-A- 2 762 232
- US-A- 2 944 433
- US-A- 3 363 435
- "Kompaktgetriebe für den Industrie-Einsatz" ANTRIEBSTECHNIK., Bd. 20, Nr. 1-2, 1981, MAINZ DE, Seite 23 XP002052149

## Beschreibung

Die Erfindung betrifft ein Adaptersystem zum Verbinden einer Motorwelle eines Motors mit einer anzutreibenden Einrichtung, insbesondere mit einem Ritzel eines Getriebes.

In der Antriebstechnik kommt es aufgrund der vielseitigen Aufgaben darauf an, besonders variable Systeme zur Verfügung zu stellen. Einerseits sollen Motoren, insbesondere Elektromotoren verschiedener Bauarten verwendbar sein, andererseits sollen diese Elektromotoren die verschiedensten Einrichtungen antreiben, z. B. Getriebe verschiedenster Bauarten mit entsprechenden (verschiedenen) anntreibenden Ritzeln. Selbst dann, wenn ein einziger Hersteller die Motoren und die Getriebe liefert, bestehen zwar hinsichtlich der Anpassung der Teile zueinander keine wesentlichen Probleme, jedoch ist der Herstellungs- und Lagerhaltungsaufwand auch in diesem Fall beträchtlich. Dies ist leicht nach den Gesetzen der Kombinatorik feststellbar, wenn man bedenkt, daß verschiedene Motoren mit verschiedenen Ein- bzw. Anbaumaßnahmen auf Getriebe (oder umgekehrt) angepaßt sein müssen, die ebenfalls verschiedene, hier relevante Abmessungen haben.

Aus der US 3,363,435 A ist eine Klauenkupplung bekannt, bei welcher zusätzlich zu einer Keilverbindung elastische Verbndungselemente zum spielfreien Verbinden von zwei Wellenenden vorgesehen sind. Über eine Lagerung der Kupplung ist der Druckschrift nichts zu entnehmen.

Aus der Druckschrift "Kompaktgetriebe für den Industrieeinsatz" Antriebstechnik, vol. 20, no.1-2, 1981, Mainz De, Seite 23, XP002052149 ist ein Getriebe bekannt, das mit verschiedenen Anschlußelementen zum Ankoppeln verschiedener Motoren ausgestattet ist. Ein gesonderter Adapter ist hier nicht vorgesehen.

Aus der EP 0 567 048 H 1 ist ein Adaptersystem bekannt, bei welchem das Adaptergehäuse zweiteilig ausgebildet ist. Bei einigen der dort gezeigten Ausführungsformen ist die Adapterwelle im zweiteiligen Gehäuse über zwei Wälzlager gelagert. Die Lager befinden sich hierbei in verschiedenen Gehäuseteilen, so daß die Genauigkeit der Wellenlagerung nicht nur durch die Genauigkeit der Aufnahmebohrungen für die Wellenlage in den Gehäuseteilen, sondern auch durch die Genauigkeit des Zusammenbaus der zwei Gehäuseteile bestimmt wird. Dadurch wird ein erhöhter Fertigungsaufwand notwendig.

Aus der FR 2 245 113 ist ein Adaptersystem der eingangs genannten Art bekannt, bei welchem das Gehäuse des Adapters einstückig ausgebildet ist. Dies bedeutet, daß dann, wenn man eine Vielzahl von anzutreibenden Einrichtungen, z.B. Getrieben, die verschiedene Flansche aufweisen, mit verschiedenen Motoren verbinden will, die ebenfalls verschiedene Flansche aufweisen, für jede der möglichen Kombinationen ein gesondertes Gehäuse des Adapters vorsehen muß. Lagerhaltung und Herstellung sind darum aufwendig.

Der Erfindung liegt die Aufgabe zugrunde, ein Adaptersystem zum Verbinden einer Motorwelle eines Elektromotors mit einer anzutreibenden Einrichtung, insbesondere mit einem Ritzel eines Getriebes aufzuzeigen, die in einfacher Weise eine Erhöhte Variabilität der Zusammenstellung bei großer Betriebssicherheit gewährleistet.

Diese Aufgabe wird durch ein Adaptersystem nach dem Patentanspruch 1 gelöst.

Ein wesentlicher Punkt der Erfindung besteht darin, daß ein System geschaffen wird, über welches "Ungenauigkeiten" ausgleichbar sind, die bei Verbindung verschiedener Systeme (Motor/Getriebe) auftreten.

Vorzugsweise sind die erste und die zweite Mitnehmereinrichtung zusätzlich relativ zueinander in einer zur Drehachse der Adapterwelle parallelen Richtung verschiebbar ausgebildet, wodurch eine weiterhin erhöhte Variabilität bei der Anpassung verschiedener Abmessungen von Motor und Getriebe gegeben ist.

Vorzugsweise ist die Adapterwelle im Gehäuse statisch bestimmt gelagert, was insbesondere über zwei in Richtung der Drehachse beabstandete Lager, vorzugsweise über Wälzlager im Gehäuse geschehen kann. Eine weitere Lagerung der Adapterwelle mit aufgesetztem Ritzel im Getriebe ist somit nicht mehr notwendig. Weiterhin ist es möglich, beispielsweise eine Riemenscheibe anstelle des Ritzels aufzusetzen, um so anstatt eines Stirnradgetriebes ein Riemengetriebe als anzutreibende Einrichtung zu verwenden.

Bei einer bevorzugten Ausführungsform der Erfindung umfaßt die erste Mitnehmereinrichtung mindestens eine Nut mit parallelen Nutwänden, die zu einer Ebene symmetrisch ausgebildet sind, welche im wesentlichen durch die Drehachse verläuft, wobei die zweite Mitnehmereinrichtung mindestens einen Zapfen umfaßt, der in die mindestens eine Nut einsetzbar ist. Diese Ausführungsform der Erfindung ist relativ leicht herstellbar und dennoch wirksam.

Der mindestens eine Zapfen ist hierbei schlanker als die mindestens eine Nut zur Gewährleistung eines Spiels in Drehrichtung zwischen den Nutwänden und dem mindestens einen Zapfen ausgebildet, wodurch nicht nur ein Achsversatz, sondern auch ein "Winkelfehler" ausgeglichen werden kann.

Vorzugsweise wird ein Zwischenstück zum Einsetzen zwischen mindestens eine der Nutwände und den mindestens einen Zapfen vorgesehen, insbesondere ein solches Zwischenstück, das den direkten Kontakt des Zapfens mit den Nutwänden (vorzugsweise in beiden Drehrichtungen) verhindert.

Um nun sowohl den Verschleiß zu verringern, als auch etwa auftretenden Spiel bei einer Umkehr der Richtung des übertragenen Drehmoments zu verhindern, wird das Zwischenstück vorzugsweise elastisch verformbar ausgebildet und mit derartigen Abmessungen hergestellt, daß es den mindestens einen Zapfen mit einer Vorspannung in der mindestens einen Nut einzwängt. Dadurch werden auch bei einem Lastrichtungswechsel - wie vorstehend angedeutet - Schläge vermieden und die Drehmomente ruckfrei übertragen. Das Zwischenstück wird zusätzlich aus einem zur Verringerung der Reibung zwischen den Nutwänden und den mindestens einen Zapfen geeigneten Material geformt, was die Verschleißanfälligkeit des Systems weiter verringert.

Besonders bevorzugt ist bei dieser Ausführungsform, daß eine Vielzahl von ersten und zweiten Gehäusehälften insbesondere mit voneinander verschiedenen ersten Flanschen und voneinander verschiedenen zweiten Flanschen zum Verbinden mit voneinander verschiedenen Motoren und/oder voneinander verschiedenen anzutreibenden Einrichtungen vorgesehen sind. Diese voneinander verschiedenen Gehäusehälften sind nun in beliebiger Weise, zumindest aber gruppenweise miteinander kombinierbar. Dies bedeutet, daß man bei drei verschiedenen anzutreibenden Einrichtungen entsprechend drei verschiedenen ersten Flanschen und drei verschiedenen Motoren, entsprechend drei verschiedenen zweiten Flanschen insgesamt nur drei erste Gehäusehälften und drei zweite Gehäusehälften benötigt, um die maximale Anzahl von Kombinationen, nämlich neun, zu bilden.

Vorzugsweise sind weiterhin eine Vielzahl von Adapterwellen zum Verbinden mit voneinander verschiedenen Ritzeln und eine Vielzahl von Kupplungsteilen zum Verbinden mit voneinander verschiedenen Motorwellen vorgesehen. Die Variabilität des Adaptersystems kann dadurch, insbesondere in Bezug auf die zu übertragenden verschieden hohen Drehmomente vergrößert werden.

Bei einer weiteren bevorzugten Ausführungsform der Erfindung ist eine Drehmomentübertragungseinrichtung zwischen dem Kupplungsteil und der Adapterwelle vorgesehen, welche einen mindestens zeitweiligen Ausgleich von Drehzahlunterschieden zwischen der Motorwelle und der anzutreibenden Einrichtung zuläßt. Durch eine solche "Funktionsbaugruppe" wird eine weitere Erhöhung der Variabilität des Adaptersystems erzielt, so daß noch mehr Anwendungsbereich erfaßbar sind.

Als derartige Drehmoment-Übertragungseinrichtung kann eine Rutschkupplung, eine hydraulische Kupplung oder eine elastische Kupplung (oder auch Kombinationen hiervon) verwendet werden, je nachdem, was hiervon der Einsatzbereich der Gesamtanordnung erfordert. Vorzugsweise wird hierbei die eingangs beschriebene Mitnehmereinrichtung durch die Drehmoment-Übertragungseinrichtung bzw. Kupplung ersetzt. Dadurch ist eine Reduktion des Fertigungsaufwandes möglich.

Als weitere Zusatzfunktion ist es bei einer bevorzugten Ausführungsform der Erfindung vorgesehen, in oder am Gehäuse eine Bremseinrichtung zum Bremsen der Adapterwelle und/oder des Kupplungsteils in mindestens einer Drehrichtung vorzusehen. Es kann hier also z. B. eine Rücklaufsperre oder auch eine in beiden Drehrichtungen wirkende Bremse, z. B. eine mechanische, elektromagnetisch betätigbare Bremse vorgesehen werden, so daß der Anwendungsbereich des Systems in einfacher Weise erhöht wird.

Bei einer weiteren bevorzugten Ausführungsform umfaßt das Gehäuse Befestigungseinrichtungen zum Lagern eines Antriebsmotors in Fußausführung und/oder Montageeinrichtungen zum Befestigen des Gehäuses auf einem Sockel oder dergleichen. Dadurch wird das "zusätzlich" vorzusehende Adaptersystem zu einem Funktionsteil, das sozusagen ein konstruktives Zentrum des herzustellenden Gesamtaufbaus bildet. Eine solche, an Getrieben angebaute Befestigungseinrichtung ist nicht unüblich. Im vorliegenden Fall aber kann z. B. ein Getriebe ohne eine solche Befestigungseinrichtung mit einer solchen sehr leicht versehen werden, so daß man sich die Herstellung gesonderter Getriebe mit Befestigungseinrichtungen zusätzlich zu solchen ohne Befestigungseinrichtungen unter Umständen ersparen kann.

Vorzugsweise sind Dichtungseinrichtungen zum Abdichten der Adapterwelle gegenüber dem Gehäuse des Adaptersystems vorgesehen, so daß ein Getriebe mit angebautem Adaptersystem in sich abgeschlossen ist. Dadurch ist es möglich, einen angebauten Elektromotor ohne Ölverlust und auch ansonsten in besonders einfacher Weise zu wechseln.

Bei einer weiteren bevorzugten Ausführungsform der Erfindung umfaßt das Adaptersystem weiterhin einen Deckelflansch, der unter Ersetzen der zweiten Gehäusehälfte mit der ersten Gehäusehälfte verbindbar ist. Die Adapterwelle ist hierbei so ausgebildet, daß sie mit ihrem zweiten Ende zum Aufsetzen einer Riemenscheibe oder eines anderen Antriebsteils aus dem Deckelflansch hervorsteht. Das System ermöglicht dadurch das Ankoppeln eines Elektromotors über ein Riemengetriebe oder dergleichen, also auch ohne Wellenverbindung. Hierbei ist vorzugsweise auch im Deckelflansch eine Dichteinrichtung zum Abdichten der Adapterwelle gegenüber dem Deckelflansch vorgesehen, so daß das Getriebe mit Deckelflansch und aus diesem hervorstehenden Wellenende eine in sich geschlossene Einheit bildet.

Bevorzugte Ausführungsformen der Erfindung ergeben sich aus den Unteransprüchen und der nachfolgenden Beschreibung von Ausführungsbeispielen, die anhand von Zeichnungen erläutert werden.

### Hierbei zeigen:

- Fig. 1: einen Längsschnitt durch eine erste Ausführungsform der Erfindung,
- Fig. 2: eine perspektivische Darstellung einer Adapterwelle aus Fig. 1,
- Fig. 3: eine perspektivische Darstellung eines Kupplungsteils aus Fig. 1,
- Fig. 4: eine perspektivische Darstellung der Adapterwelle nach Fig. 2 aus einem anderen Winkel,
- Fig. 5: eine Draufsicht auf ein Zwischenstück aus Fig. 1,
- Fig. 6: einen Schnitt durch das Zwischenstück nach Fig. 5 entlang der Linie VI-VI,
- Fig. 7 - 9: drei verschiedene Varianten eines Adapter-systems zur Verwendung mit verschiedenen Motoren und verschiedenen anzutreibenden Einrichtungen,
- Fig. 10: eine weitere Ausführungsform der Erfindung mit einer elastischen Kupplung,
- Fig. 11: eine weitere Ausführungsform der Erfindung mit einer Rutschkupplung,
- Fig. 12: eine weitere Ausführungsform der Erfindung mit einer hydraulischen Kupplung,
- Fig. 13: eine weitere Ausführungsform der Erfindung mit elektromagnetisch betätigbarer, mechanischer Bremse und zusätzlicher hydraulischer Kupplung,
- Fig. 14: eine weitere Ausführungsform der Erfindung mit einer Rücklaufsperre,
- Fig. 15: eine weitere Ausführungsform der Erfindung zur Erläuterung eines Gehäusedeckels,
- Fig. 16: eine weitere Ausführungsform der Erfindung mit Befestigungseinrichtungen zum Anbau eines Motors,
- Fig. 17: eine perspektivische, schematisierte Darstellung zur Erläuterung von Kombinationsmöglichkeiten der Erfindung und zwar zum Anbau an Ritzel gleicher Bohrungsdurchmesser und
- Fig. 18: eine perspektivische Darstellung zur Erläuterung einer größeren Kombinationsgruppe von Adapter-systemen.

Bei der nachfolgenden Beschreibung werden für gleiche und gleichwirkende Teile dieselben Bezugsziffern verwendet.

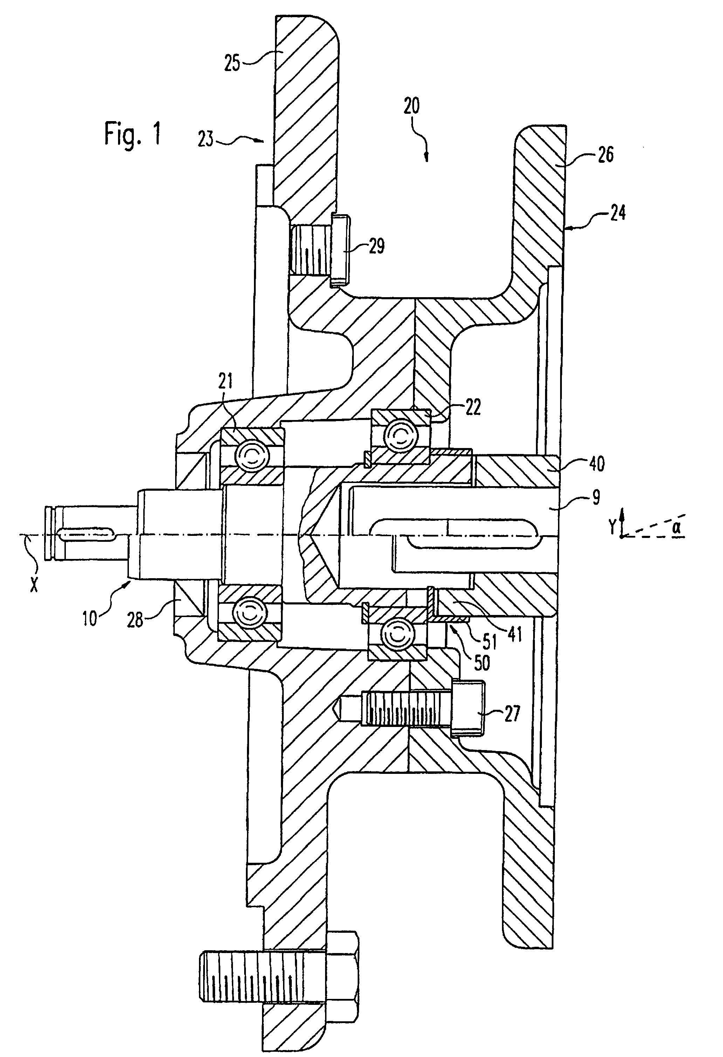

Bei der in Fig. 1 gezeigten Ausführungsform des erfindungsgemäßen Adaptersystems ist eine Adapterwelle 10 in einem Gehäuse 20 über zwei voneinander beabstandete Wälzlager 21, 22 gelagert. Das Gehäuse 20 ist aus einer ersten Gehäusehälfte 25 und einer zweiten Gehäusehälfte 26 zusammengesetzt, die miteinander über Verbindungsbolzen 27 starr verbunden sind. Die Lager 21 und 22 sitzen in der ersten Gehäusehälfte 25, wobei das in Fig. 1 gezeigte rechte Lager durch die zweite Gehäusehälfte 26 in der ersten Gehäusehälfte 25 festgesetzt ist.

Die Adapterwelle 10 weist an ihrem ersten Ende einen Ritzelansatz 11 auf, auf welchem ein Ritzel in üblicher Weise mittels einer Keilverbindung drehfest angebracht werden kann. Die Adapterwelle 10 ist gegenüber der ersten Gehäusehälfte 25 mittels eines Dichtringes 28 abgedichtet.

Die ersten Gehäusehälfte 25 weist nach außen zeigend einen ersten Flansch 23, die zweite Gehäusehälfte 26 einen dazu entgegengesetzt gerichtet zeigenden zweiten Flansch 24 auf. Der Flansch 25 ist so ausgebildet, daß das Gehäuse 20 über diesen an einer anzutreibenden Einrichtung, insbesondere an einem Getriebe angeflanscht werden kann. In diesem Zustand, also bei einem (hier nicht gezeigt) aufmontierten Ritzel und angeflanschtem Getriebe ist das Getriebe nach außen abgedichtet, so daß es nach Befüllung mit Öl durch eine Bohrung in der ersten Gehäusehälfte 25 und deren Verschluß durch einen Stopfen 29 vollständig abgedichtet ist.

Der zweite Flansch 24 an der zweiten Gehäusehälfte 26 ist so ausgebildet, daß dort ein Elektromotor angeflanscht werden kann. Auf einer hier nur angedeutete Motorwelle 9 ist ein Kupplungsteil 40 aufsetzbar und ebenfalls über eine an sich bekannte Keilverbindung drehfest befestigbar. Das Kupplungsteil 40 weist hierbei in Richtung der Drehachse x aber radial zu dieser versetzt zwei einander diametral gegenüberliegende Zapfen 41, 41' auf, welche in Nuten 12, 12' einsetzbar sind, die in einem zweiten Ende der Adapterwelle 10 mit einer zu den Zapfen 41, 41' korrespondierenden Richtung einsetzbar sind. Die zum Aufsetzen des Kupplungsteils 40 auf eine Motorwelle 9 vorgesehene Bohrung im Kupplungsteil 40 ist engpassend zur Motorwelle ausgebildet, während im zweiten Ende der Adapterwelle eine Bohrung mit größerem Durchmesser vorgesehen ist, so daß die Motorwelle 9 über das Kupplungsteil 40 hinausstehend in die Adapterwelle 10 hineinragend angeordnet sein kann.

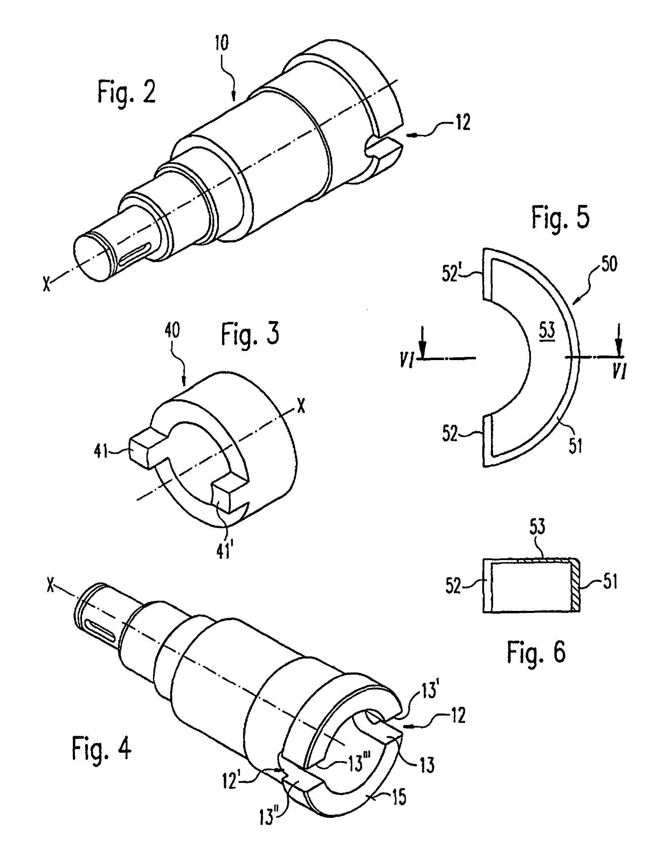

Die Nuten 12, 12' sind hierbei so breit ausgebildet, daß die Zapfen 41, 41' mit Spiel in sie einsetzbar sind. Das Spiel ist hierbei so groß, daß zwischen die Zapfen 41, 41' und die ihnen gegenüberliegenden Nutwände 13, 13' bzw. 13'', 13''' (siehe Fig. 2-4) Zwischenstücke 50 einsetzbar sind, von denen eines in den Fig. 5 und 6 dargestellt ist. Jedes Zwischenstück 50 umfaßt eine umlaufende Wand 51 sowie zwei radial von dieser nach innen ragende Abschnitte 52, 52', sowie eine Kreisring-abschnittsförmige Bodenwand 53. Die umlaufende Wand 51 und die Abschnitte 52, 52' sind so geformt, daß das Zwischenstück 50 auf das zweite Ende der Adapterwelle 10 paßgenau so aufsetzbar ist, daß die Abschnitte 52, 52' mit jeweils einer Wand auf einer der Nutwände 13, 13'' bzw. 13' und 13''' aufliegen, während die Bodenwand 53 auf einer Stirnfläche 15 des zweiten Endes der Welle 9 aufliegen kann.

Von den soeben erläuterten kappenförmigen Zwischenstücken 50 werden zwei Stück auf das zweite Ende der Adapterwelle 10 aufgesetzt, wobei die paarige Ausführung des Zwischenstücks 50 aus zwei getrennten Teilen den Vorteil mit sich bringt, daß lediglich die Wandstärken der nach innen ragenden Abschnitte 52, 52' dem Spalt zwischen den Zapfen 41, 41' und den Nutwänden 13, 13' bzw. 13'', 13''' angepaßt sein müssen (was die Fertigung vereinfacht), während bei einer alternativen Ausführungsform des Zwischenstücks 50, die in Fig. 1 gezeigt ist und ein einziges, ringförmiges Stück umfaßt, auch die Abstände zwischen den radial nach innen ragenden Abschnitten 52, 52' (dort sind vier solche Abschnitte vorgesehen) den Abständen der Nutwände 13-13''' der mit hoher Genauigkeit gefrästen Nut 12, 12' entsprechen müssen.

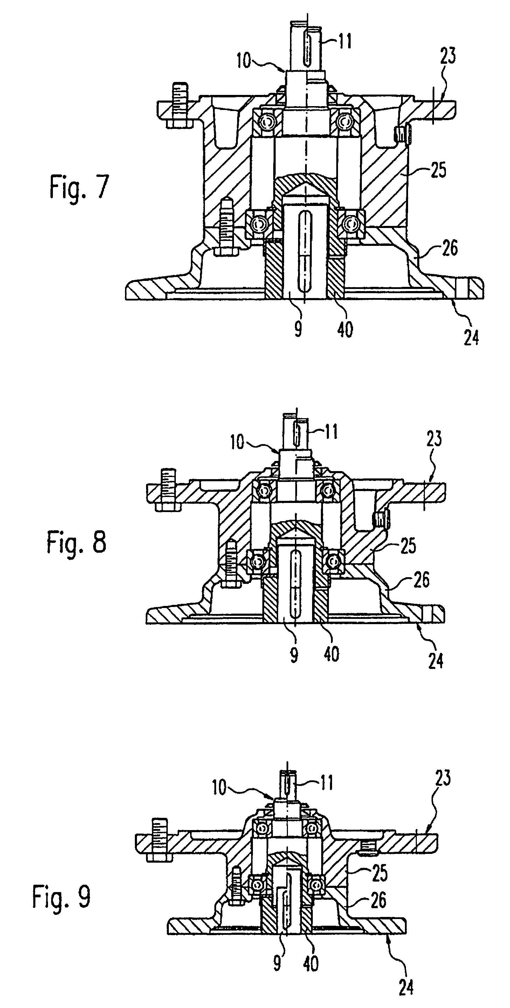

Beim erfindungsgemäßen Adaptersystem sind - wie eingangs erläutert - eine Vielzahl von verschiedenen Gehäusehälften 25, 26 mit verschiedenen ersten bzw. zweiten Flanschen 23, 24 sowie verschiedene Adapterwellen 10 vorgesehen. Ein Beispiel hierfür ist in den Fig. 7 bis 9 gezeigt.

Wie aus den Fig. 7, 8 und 9 hervorgeht, sind bei allen drei Ausführungsformen Adapterflansche 23 an den ersten Gehäusehälften 25 vorgesehen, welche dieselben Anbaumaße (an ein Getriebe) aufweisen. Unterschiedlich sind bei den drei Ausführungsformen die Ritzelansätze 11 der Adapterwellen 10 zum Aufsetzen verschiedener Ritzel - deren Bohrungsdurchmesser in Anpassung an den Zahnkranz-Fußkreisdurchmesser ausgebildet ist -, so daß dieselben Getriebegehäuse aber Getriebe voneinander verschiedener Übersetzungen anbringbar sind.

Die zweiten Flansche 24 an den zweiten Gehäusehälften 26 unterscheiden sich ebenso voneinander, wie die Kupplungsteile 40 bzw. die darin aufgenommenen Wellen 9 angeflanschter Elektromotoren. Es werden bei den Ausführungsbeispielen nach den Fig. 7 bis 9 also Motoren verschiedener Leistungsklassen mit entsprechend verschiedenen Wellendurchmessern an Getriebe angeflanscht, die jeweils die gleichen Gehäuse, jedoch verschiedene Ritzeldurchmesser aufweisen.

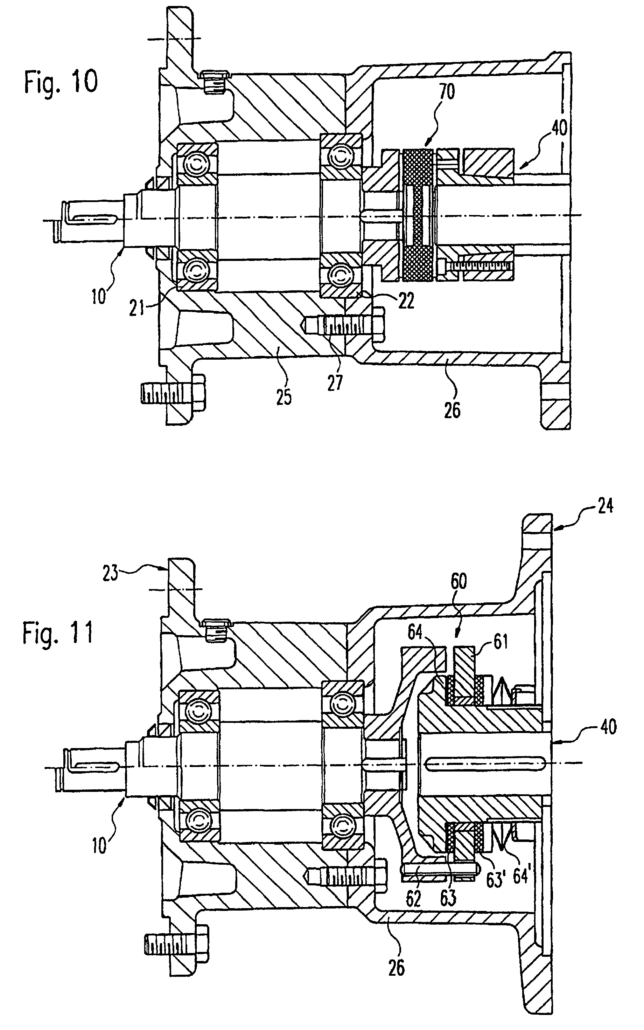

Bei der in Fig. 10 gezeigten Ausführungsform der Erfindung ist an der ersten Gehäusehälfte 25, in welcher, wie oben ausgeführt, die Adapterwelle 10 über die Lager 21 und 22 statisch bestimmt gelagert ist, eine zweite Gehäusehälfte 26 über den Schraubbolzen 27 angebracht, in welcher als Kupplungsteil 40 eine - an sich bekannte - elastische Kupplung 70 sitzt. Diese Ausführungsform der Erfindung ist insbesondere zum Anflanschen von Servomotoren vorgesehen, die bekanntlich sehr hohe Drehbeschleunigungen gewährleisten und dabei hoch präzise Bewegungsabläufe steuern sollen.

Die in Fig. 11 gezeigte Ausführungsform der Erfindung unterscheidet sich von der nach Fig. 10 dadurch, daß als Kupplungsteil 40 eine Rutschkupplung 60 vorgesehen ist, bei welcher eine Scheibe 61 auf dem Kupplungsteil 40 drehbar gelagert und über einen Mitnehmerstift 62 mit der Adapterwelle 10 drehfest verbunden ist. Die Scheibe 61 wird an ihren Stirnflächen von kreisringförmigen Friktionsscheiben 63, 63' eingespannt, von denen die der Adapterwelle 10 zugewandte Scheibe 63 auf einem, vom Kupplungsteil 40 radial hervorstehenden Ansatz 64 aufliegt, während die gegenüberliegende Friktionsscheibe 63' durch ein Paar von Federscheiben 64' in Richtung auf die Adapterwelle 10 vorgespannt ist. Dann, wenn das zwischen dem Kupplungsteil 40 und der Adapterwelle 10 übertragene Drehmoment die Friktionskraft zwischen den Friktionsscheiben 63, 63' und der Scheibe 61 übersteigt, entsteht ein Schlupf zwischen dem Kupplungsteil 40 und der Adapterwelle 10. Bei einer weiteren, hier nicht gezeigten Ausführungsform der Erfindung sind in der zweiten Gehäusehälfte 26 Aufnehmer zum meßtechnischen Erfassen des Schlupfes vorgesehen.

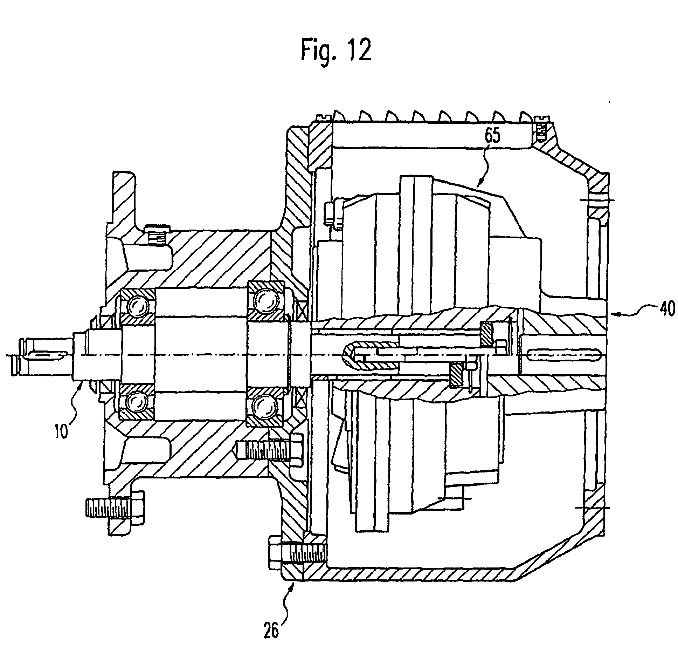

Die in Fig. 12 gezeigte Ausführungsform der Erfindung unterscheidet sich von der nach Fig. 11 dadurch, daß anstelle der zuvor beschriebenen Rutschkupplung 60 in der zweiten Gehäusehälfte 26 eine hydraulische Kupplung 65 aufgenommen ist, welche das zweite Kupplungsteil 40 bildet. In diesem Fall ist die zweite Gehäusehälfte 26 darüber hinaus zweiteilig ausgebildet, was den Bau- und Zusammenbauaufwand erheblich verringert. Darüber hinaus ist die Adapterwelle 10 in der zweiten Gehäusehälfte 26 ebenfalls abgedichtet gelagert. Die hier gezeigte hydraulische Kupplung ist im übrigen an sich bekannt.

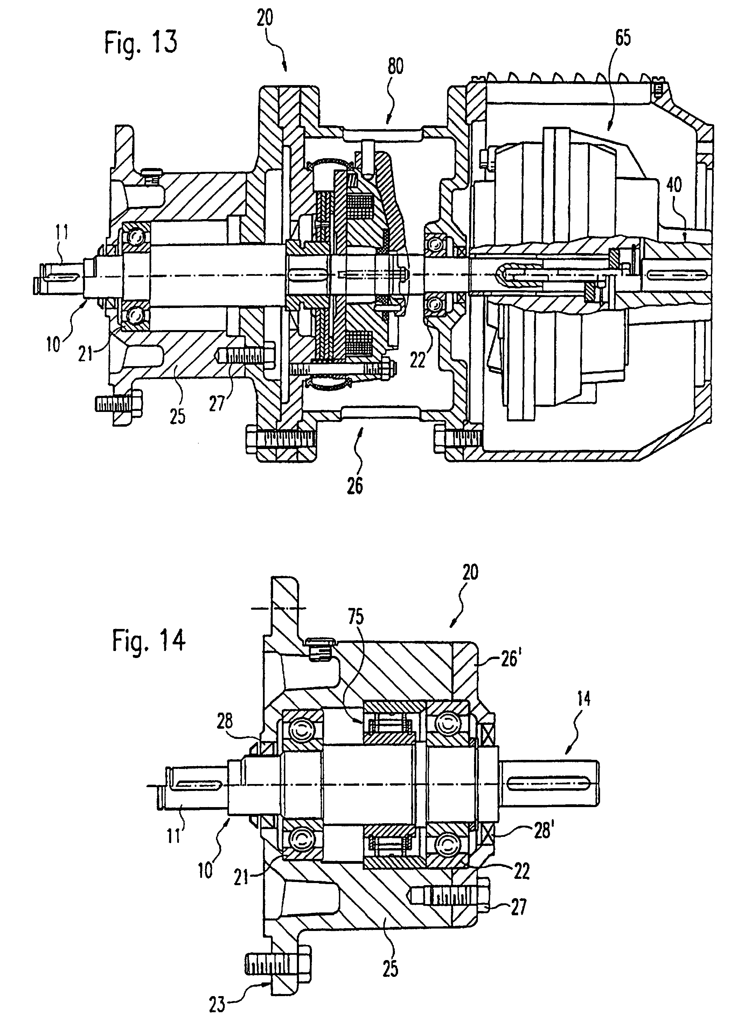

Die in Fig. 13 gezeigte weitere Ausführungsform der Erfindung unterscheidet sich von der nach Fig. 12 dadurch, daß die an der ersten Gehäusehälfte 25 angebrachte zweite Gehäusehälfte 26 insgesamt dreiteilig ausgebildet ist. Derjenige Teil der zweiten Gehäusehälfte 26, welcher dem Ritzelansatz 11 der Adapterwelle 10 abgewandt ist und das Kupplungsteil 40 enthält, umschließt wieder eine hydraulische Kupplung 65 und ist in seinem Aufbau gleich dem zweiten Teil der zweiten Gehäusehälfte 26 der Ausführungsform nach Fig. 12 aufgebaut. Der ersten Teil der zweiten Gehäusehälfte 26, der mit der ersten Gehäusehälfte 25 über den Verbindungsbolzen 27 verbunden ist, entspricht in seinem Aufbau dem ersten Teil der zweiten Gehäusehälfte 26 der Ausführungsform nach Fig. 12.

Zwischen diesem ersten und dem dritten Teil der zweiten Gehäusehälfte 26 ist bei der Ausführungsform nach Fig. 13 eine elektromagnetisch betätigbare, mechanische Bremse 80 in einem entsprechenden Zwischengehäuseabschnitt vorgesehen, die an sich bekannt ist. Diese elektromagnetisch betätigbare mechanische Bremse 80 ist so eingebaut, daß sie die Adapterwelle 10 (gegenüber dem Gehäuse 20) abbremsen kann.

Die Ausführungsform nach Fig. 13 unterscheidet sich von der nach Fig. 12 weiterhin dadurch, daß die (entsprechend länger ausgebildete) Adapterwelle 10 über das erste Lager 21 zwar ebenso wie die zuvor gezeigten Ausführungsformen in der ersten Gehäusehälfte 25, aber über das zweite Lager 22 in dem mittleren Gehäuseabschnitt der zweiten Gehäusehälfte gelagert ist. Auf diese Weise ist gewährleistet, daß einerseits wieder eine statisch bestimmte Lagerung entsteht, andererseits das zweite Lager 22 möglichst nahe an der hydraulischen Kupplung 65 sitzt, wobei die elektromagnetisch betätigbare mechanische Bremse 80 zwischen den Lagern 21 und 22 angeordnet ist.

Die in Fig. 14 gezeigte Ausführungsform der Erfindung unterscheidet sich insofern von den zuvor gezeigten Ausführungsformen, als die an der ersten Gehäusehälfte 25 befestigte zweite Gehäusehälfte als (einfacher) Deckelflansch 26 ausgebildet ist, aus welchem die Adapterwelle 10 mit ihrem zweiten, dem Ritzelansatz 11 gegenüberliegenden Ende über ein Dichtung 28' abgedichtet hervorsteht. Dieses zweite Ende 14 der Adapterwelle 10 ist nun so ausgebildet, daß eine Riemenscheibe oder dergleichen aufgekeilt werden kann. Eine so an ein Getriebe über den ersten Flansch 23 an der ersten Gehäusehälfte 25 angeflanschte Adaptereinrichtung wird also nicht über eine Wellenverbindung sondern über ein anderes Getriebe (Riemenantrieb, Kettenantrieb, Kupplung oder dergleichen) mit einem Elektromotor verbunden.

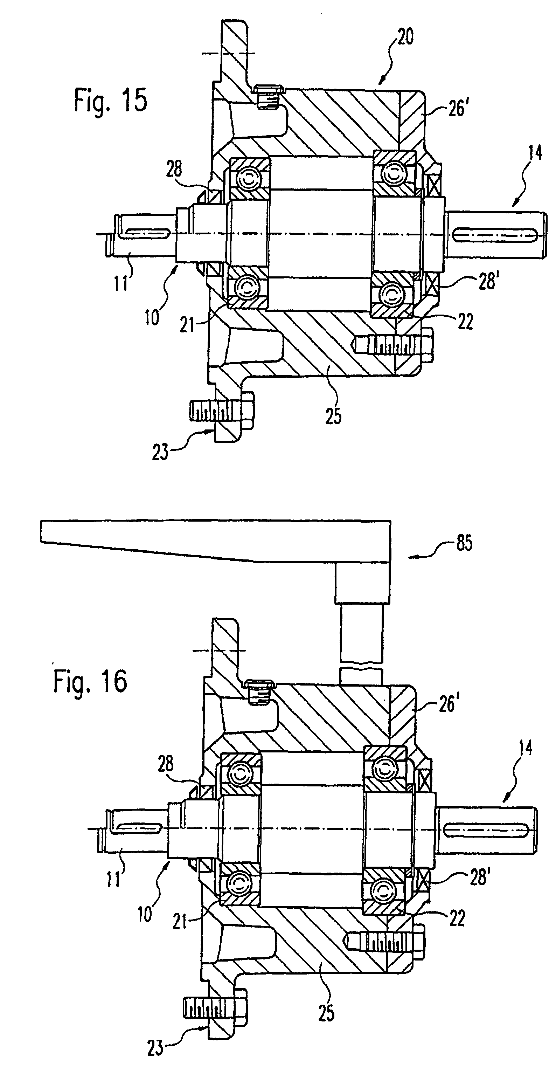

Weiterhin ist bei der in Fig. 14 gezeigten Ausführungsform der Erfindung zwischen den in der Gehäusehälfte 25 angeordneten Lagern 21 und 22 eine Rücklaufbremse 75 vorgesehen, welche nur einen Drehrichtung der Adapterwelle 10 gegenüber dem Gehäuse 20 zuläßt. Derartige Rücklaufbremsen sind an sich bekannt und werden hier nicht weiter beschrieben. Selbstverständlich ist es möglich, eine derartige Rücklaufbremse 75 auch in einer Ausführungsform der Erfindung vorzusehen, wie sie beispielsweise in den Fig. 1 bis 12 beschrieben wurde. Weiterhin ist es natürlich möglich, die Rücklaufsperre 75 nicht miteinzubauen, wie dies in Fig. 15 gezeigt ist.

Die in Fig. 16 gezeigte Ausführungsform der Erfindung unterscheidet sich von der nach Fig. 15 im wesentlichen dadurch, daß an der ersten Gehäusehälfte 25 eine Befestigungseinrichtung 85 angebracht ist, auf welcher ein Antriebsmotor in Fußausführung aufmontiert werden kann, der dann z. B. über ein Riemengetriebe mit der Adapterwelle 10 in eine drehfeste Verbindung bringbar ist.

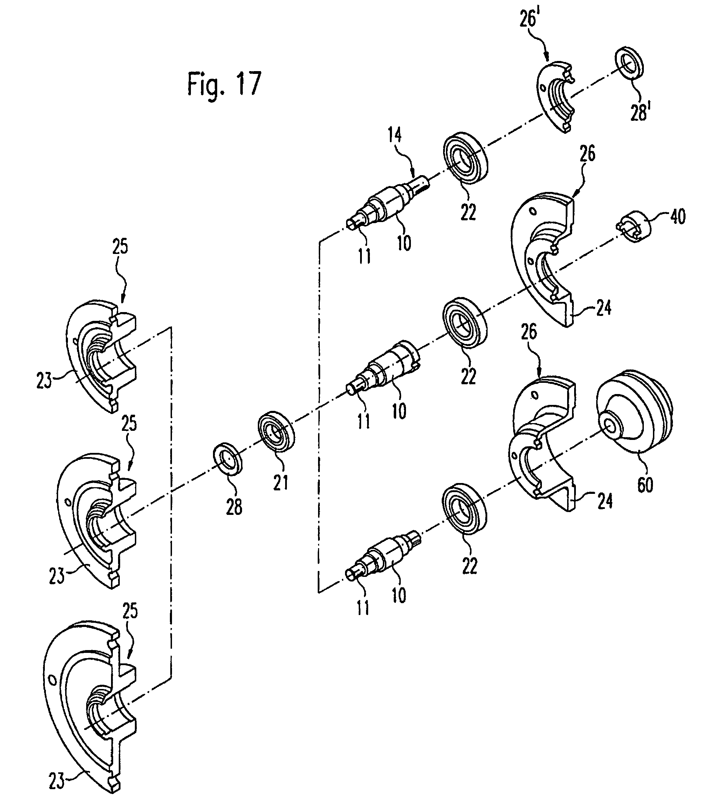

Zur Erläuterung des Gesamtsystems sind in Fig. 17 drei verschiedene erste Gehäusehälften 25 gezeigt, die jeweils verschiedene erste Flansche 23 zum Anflanschen an Getriebe mit verschiedenen Gehäusen aufweisen. Die in Fig. 17 angedeuteten zweiten Gehäusehälften 26 zum Befestigen an den ersten Gehäusehälften 25 weisen ebenfalls verschiedene zweite Flansche 24 auf bzw. sind als Deckelflansch 26' ausgebildet.

Die in Fig. 17 gezeigten Adapterwellen 10 sind an ihren ersten Enden mit gleichartigen Ritzelansätzen 11 zum Aufsetzen von Ritzeln gleicher Bohrungsdurchmesser ausgestattet. Die zweiten Enden der Adapterwellen 10 sind verschiedenartig ausgebildet, wobei in Fig. 17 oben ein hervorstehendes Ende gemäß der Ausführungsform nach Fig. 15, in Fig. 17 in der Mitte ein zweites Ende entsprechend der Ausführungsform nach Fig. 1 und in Fig. 17 unten ein zweites Ende zum Anbringen einer Rutschkupplung 60 aufgezeigt ist. Aus den Bezugsziffern der Fig. 17 sind die übrigen, zuvor schon beschriebenen Einzelteile ersichtlich.

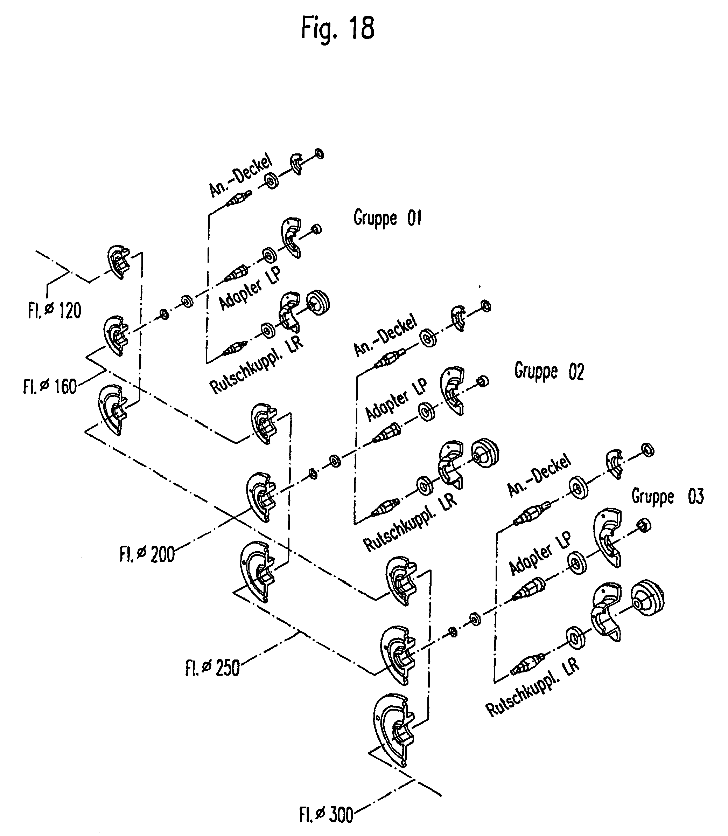

In Fig. 18 sind nun drei Gruppen der System-Untergruppe nach Fig. 17 dargestellt, wobei aus den in ihren (relativen) Größenabmessungen sowie den dort enthaltenen Bezeichnungen hervorgeht, welche Kombinationsmöglichkeiten hinsichtlich der ersten Flansche gegeben sind. Es sei darauf hingewiesen, daß diese Darstellung keineswegs vollständig in Bezug auf die hier erzielbaren Kombinationsmöglichkeiten ist, sondern ebenfalls wieder einen Teilausschnitt des Gesamtsystems darstellt, dessen Einzelteile zuvor beschrieben wurden.

### Bezugzeichenliste

- 9: Welle
- 10: Adapterwelle
- 11: Ritzelansatz
- 12: erste Nut
- 12': zweite Nut
- 13, 13', 13'', 13''': Nutwand
- 14: zweites Ende
- 15: Stirnfläche
- 20: Gehäuse
- 21: erstes Lager
- 22: zweites Lager
- 23: erster Flansch
- 24: zweiter Flansch
- 25: erste Gehäusehälfte
- 26: zweite Gehäusehälfte
- 26': Deckelflansch
- 27: Verbindungsbolzen
- 28, 28': Dichtung
- 29: Stopfen
- 40: Kupplungsteil
- 41: erster Zapfen
- 41': zweiter Zapfen
- 50: Zwischenstück
- 51: umlaufende Wand
- 52, 52': Abschnitt
- 53: Bodenwand
- 60: Rutschkupplung
- 61: Scheibe
- 62: Mitnehmerstift
- 63, 63': Friktionsscheibe
- 64: Ansatz
- 64': Federscheiben
- 65: Hydraulikkupplung
- 70: elastische Kupplung
- 75: Rücklaufsperre
- 80: elektromagnetisch betätigbare mechanische Bremse
- 85: Befestigungseinrichtung

## Patentansprüche

1. Adaptersystem zum Verbinden einer Motorwelle (9) eines (Elektro-)Motors mit einer anzutreibenden Einrichtung, insbesondere mit einem Ritzel eines Getriebes, umfassend
- eine Adapterwelle (10) mit einem Ritzelansatz (11) an einem ersten Ende zur drehfesten Verbindung mit dem Ritzel;
- ein Gehäuse (20) mit Einrichtungen (21, 22) zur Lagerung der Adapterwelle (10), sowie mit einem ersten Flansch (23) zum Anbau an das Getriebe und mit einem zweiten Flansch (24) zum Anbau an den Motor derart, daß der Motor mit dem Getriebe über das Gehäuse (20) im wesentlichen fest verbunden ist;
- ein Kupplungsteil (40), das mit der Motorwelle (9) drehfest verbindbar ist;
- eine erste Mitnehmereinrichtung (41, 41') am Kupplungsteil (40) und eine zweite Mitnehmereinrichtung (12. 12') am zweiten Ende der Adapterwelle (10), die korrespondierend zur ersten Mitnehmereinrichtung (41, 41') ausgebildet ist und mit dieser in Eingriff steht zum Übertragen eines Drehmomentes zwischen dem Kupplungsteil (40) und der Adapterwelle (10);
wobei die erste und die zweite Mitnehmereinrichtung (41, 41', 12, 12') relativ zueinander mindestens in einer zu einer Drehachse (x) der Adapterwelle (10) senkrechten Richtung (y) und in einem Winkel (α) zur Drehachse (x) bewegbar ausgebildet sind,
**dadurch gekennzeichnet, daß**
daß der erste Flansch (23) an einer ersten Gehäusehälfte (25) und der zweite Flansch (24) an einer zweiten Gehäusehälfte (26) angebracht und die Gehäusehälften (25, 26) miteinander lösbar verbunden sind,
daß die Einrichtungen (21, 22) zum lagern der Adapterwelle in der ersten Gehäusehälfte (25) vorgesehen sind und
daß ein Lager (22) durch die zweite Gehäusehälfte (26) in der ersten Gehäusehälfte (25) festgesetzt ist.

2. Adaptersystem nach Anspruch 1,
**dadurch gekennzeichnet, daß**
die erste und die zweite Mitnehmereinrichtung (41, 41', 12, 12') relativ zueinander in einer zur Drehachse (x) der Adapterwelle parallelen Richtung verschiebbar ausgebildet sind.

3. Adaptersystem nach Anspruch 1,
**dadurch gekennzeichnet, daß**
die Adapterwelle (10) über zwei in Richtung der Drehachse (x) beabstandete Lager (21, 22), vorzugsweise über Wälzlager gelagert ist.

4. Adaptersystem nach einem der vorhergehenden Ansprüche,
**dadurch gekennzeichnet, daß**
die erste Mitnehmereinrichtung mindestens eine Nut (12, 12') mit Nutwänden (13, 13') umfaßt, die zu einer Ebene symmetrisch ausgebildet sind, welche im wesentlichen durch die Drehachse (x) verläuft und daß die zweite Mitnehmereinrichtung mindestens einen in die mindestens eine Nut (12, 12') einsetzbaren Zapfen (41, 41') umfaßt.

5. Adaptersystem nach Anspruch 4,
**dadurch gekennzeichnet, daß**
der mindestens eine Zapfen (41, 41') schlanker als die mindestens eine Nut (12, 12') zur Gewährleistung eines Spiels in Drehrichtung zwischen den Nutwänden (13, 13') und dem mindestens einen Zapfen (41, 41') ausgebildet ist.

6. Adaptersystem nach Anspruch 5,
**gekennzeichnet durch**
ein Zwischenstück (50) zum Einsetzen zwischen mindestens eine der Nutwände (13, 13') und den mindestens einen Zapfen (41, 41').

7. Adaptersystem nach Anspruch 6,
**dadurch gekennzeichnet, daß**
das Zwischenstück (50) elastisch verformbar ausgebildet und derart bemessen ist, daß es den mindestens einen Zapfen (41, 41') mit einer Vorspannung in der mindestens einen Nut (12, 12') einzwängt.

8. Adaptersystem nach einem der Ansprüche 6 oder 7,
**dadurch gekennzeichnet, daß**
das Zwischenstück (50) aus einem zur Verringerung der Reibung zwischen den Nutwänden (13, 13') und dem mindestens einen Zapfen (41, 41') geeigneten Material ausgebildet ist.

9. Adaptersystem nach Anspruch 1,
**dadurch gekennzeichnet, daß**
eine Vielzahl von ersten und zweiten Gehäusehälften (25, 26) mit voneinander verschiedenen ersten Flanschen (23) und voneinander verschiedenen zweiten Flanschen (24) zum Verbinden mit voneinander verschiedenen anzutreibenden Einrichtungen und/oder voneinander verschiedenen Motoren vorgesehen ist.

10. Adaptersystem nach Anspruch 1,
**dadurch gekennzeichnet, daß**
eine Vielzahl von Adapterwellen (10) zum Verbinden mit voneinander verschiedenen Ritzeln und eine Vielzahl von Kupplungsteilen (40) zum Verbinden mit voneinander verschiedenen Motorwellen vorgesehen ist.

11. Adaptersystem nach Anspruch 1,
**gekennzeichnet durch**
eine Drehmoment-Übertragungseinrichtung (60, 65, 70) zwischen dem Kupplungsteil (40) und der Adapterwelle (10) zum mindestens zeitweiligen Ausgleich von Drehzahlunterschieden zwischen der Motorwelle der anzutreibenden Einrichtung.

12. Adaptersystem nach Anspruch 11,
**dadurch gekennzeichnet, daß**
die Drehmoment-Übertragungseinrichtung eine Rutschkupplung (60) und/oder eine hydraulische Kupplung (65) und/oder eine elastische Kupplung (70) umfaßt.

13. Adaptersystem nach einem der Ansprüche 11 oder 12,
**dadurch gekennzeichnet, daß**
die Mitnehmereinrichtungen (41, 41') in der Drehmoment-Übertragungseinrichtung (60, 65, 70) ausgebildet sind.

14. Adaptersystem nach einem der vorhergehenden Ansprüche,
**gekennzeichnet durch**
eine im oder am Gehäuse (80) angeordnete Sperreinrichtung (75, 80) zum Sperren der Adapterwelle und/oder des Kupplungsteils (40) in mindestens einer Drehrichtung.

15. Adaptersystem nach einem der vorhergehenden Ansprüche,
**dadurch gekennzeichnet, daß**
das Gehäuse (20) Befestigungseinrichtungen (85) zum Lagern eines Antriebsmotors in Fußausführung und/oder Montageeinrichtungen zum Befestigen des Gehäuses (20) auf einem Sockel oder dergleichen aufweist.

16. Adaptersystem nach einem der vorhergehenden Ansprüche,
**gekennzeichnet durch**
Dichteinrichtungen (28) zum Abdichten der Adapterwelle (10) gegenüber dem Gehäuse (20).

17. Adaptersystem nach Anspruch 1,
**gekennzeichnet durch**
einen Deckelflansch (26'), der anstelle der zweiten Gehäusehälfte (26) mit der ersten Gehäusehälfte (25) verbindbar ist, wobei die Adapterwelle (10) mit ihrem zweiten Ende (14) zum Aufsetzen einer Riemenscheibe oder dergleichen Antriebsteil aus dem Deckelflansch hervorsteht.

18. Adaptersystem nach Anspruch 17,
**gekennzeichnet durch**
eine Dichteinrichtung (28') zur Abdichtung der Adapterwelle (10) gegenüber dem Deckelflansch (26').

## Claims

1. An adapter system for connecting a motor shaft (9) of an (electric) motor to a device to be driven, in particular to a pinion of a gear, comprising
- an adapter shaft (10) having a pinion projection (11) at a first end for torsion-resistant connection to the pinion;
- a housing (20) having devices (21, 22) for supporting the adapter shaft (10), and having a first flange (23) for attachment to the gear and having a second flange (24) for attachment to the motor, such that the motor is substantially fixedly connected to the gear by way of the housing (20);
- a coupling part (40) which may be connected to the motor shaft (9) in torsion-resistant manner;
- a first driver device (41, 41') on the coupling part (40) and a second driver device (12, 12') at the second end of the adapter shaft (10), which is constructed to correspond with the first driver device (41, 41') and is in engagement therewith for the purpose of transmitting a torque between the coupling part (40) and the adapter shaft (10);
the first and the second driver device (41, 41', 12, 12') being constructed such that they are movable relative to one another at least in a direction (y) perpendicular to an axis of rotation (x) of the adapter shaft (10) and at an angle (α) with respect to the axis of rotation (x),
**characterised in that** the first flange (23) is attached to a first housing half (25) and the second flange (24) is attached to a second housing half (26), and the housing halves (25, 26) are detachably connected to one another,
**in that** the devices (21, 22) for supporting the adapter shaft are provided in the first housing half (25), and **in that** a bearing (22) is fixed in the first housing half (25) by means of the second housing half (26).

2. An adapter system according to Claim 1, **characterised in that** the first and the second driver device (41, 41', 12, 12') are constructed such that they may be displaced relative to one another in a direction parallel to the axis of rotation (x) of the adapter shaft.

3. An adapter system according to Claim 1, **characterised in that** the adapter shaft (10) is supported by way of two bearings (21, 22) spaced in the direction of the axis of rotation (x), preferably by way of roller bearings.

4. An adapter system according to one of the preceding claims, **characterised in that** the first driver device comprises at least one groove (12, 12') having groove walls (13, 13') which are constructed symmetrically with respect to a plane extending substantially through the axis of rotation (x), and **in that** the second driver device comprises at least one journal (41, 41') which may be inserted into the at least one groove (12, 12').

5. An adapter system according to Claim 4, **characterised in that** the at least one journal (41, 41') is of a slimmer construction than the at least one groove (12, 12') to ensure a play in the direction of rotation between the groove walls (13, 13') and the at least one journal (41, 41').

6. An adapter system according to Claim 5, **characterised by** an intermediate piece (50) for insertion between at least one of the groove walls (13, 13') and the at least one journal (41, 41').

7. An adapter system according to Claim 6, **characterised in that** the intermediate piece (50) is constructed to be resiliently deformable and is dimensioned such that it presses the at least one journal (41, 41') with pre-tension in the at least one groove (12, 12').

8. An adapter system according to one of Claims 6 or 7, **characterised in that** the intermediate piece (50) is constructed from a material suitable for reducing the friction between the groove walls (13, 13') and the at least one journal (41, 41').

9. An adapter system according to Claim 1, **characterised in that** a plurality of first and second housing halves (25, 26) having mutually different first flanges (23) and mutually different second flanges (24) are provided for connection to mutually different devices to be driven and/or mutually different motors.

10. An adapter system according to Claim 1, **characterised in that** a plurality of adapter shafts (10) are provided for connection to mutually different pinions, and a plurality of coupling parts (40) are provided for connection to mutually different motor shafts.

11. An adapter system according to Claim 1, **characterised by** a torque-transmitting device (60, 65, 70) between the coupling part (40) and the adapter shaft (10) for the at least temporary compensation of speed differences between the motor shaft and the device to be driven.

12. An adapter system according to Claim 11, **characterised in that** the torque-transmitting device comprises a slip coupling (60) and/or a hydraulic coupling (65) and/or a flexible coupling (70).

13. An adapter system according to one of Claims 11 and 12, **characterised in that** the driver devices (41, 41') are constructed in the torque-transmitting device (60, 65, 70).

14. An adapter system according to one of the preceding claims, **characterised by** a blocking device (75, 80) which is arranged in or on the housing (80) [sic] for the purpose of blocking the adapter shaft and/or the coupling part (40) in at least one direction of rotation.

15. An adapter system according to one of the preceding claims, **characterised in that** the housing (20) has securing devices (85) for supporting a floor-mounted drive motor, and/or mounting devices for securing the housing (20) on a base or the like.

16. An adapter system according to one of the preceding claims, **characterised by** sealing devices (28) for sealing the adapter shaft (10) with respect to the housing (20).

17. An adapter system according to Claim 1, **characterised by** a cover flange (26'), which, instead of the second housing half (26), may be connected to the first housing half (25), the adapter shaft (10) protruding from the cover flange by means of its second end (14) for the purpose of attaching a belt pulley or similar driving part.

18. An adapter system according to Claim 17, **characterised by** a sealing device (28) for sealing the adapter shaft (10) with respect to the cover flange (26').

## Revendications

1. Système d'adaptation pour relier un arbre moteur (9) d'un moteur (électrique) à un dispositif à entraîner, en particulier à un pignon d'une transmission, comprenant
- un arbre d'adaptation (10) avec un bout pour pignon (11) à une première extrémité, pour la liaison solidaire en rotation avec le pignon ;
- un boîtier (20) avec des dispositifs (21, 22) pour supporter l'arbre d'adaptation (10), ainsi qu'avec une première bride (23) pour le montage rapporté sur la transmission et avec une deuxième bride (24) pour le montage rapporté sur le moteur, de manière que le moteur soit relié sensiblement fixement à la transmission, par l'intermédiaire du boîtier (20) ;
- un élément d'accouplement (40) qui peut être relié solidairement en rotation à l'arbre moteur (9) ;
- un premier dispositif d'entraînement (41, 41') sur l'élément d'accouplement (40) et un deuxième dispositif d'entraînement (12, 12') à la deuxième extrémité de l'arbre d'adaptation (10), qui est réalisé en correspondance avec le premier dispositif d'entraînement (41, 41') et qui est en prise avec celui-ci pour la transmission d'un couple de rotation entre l'élément d'accouplement (40) et l'arbre d'adaptation (10) ;
le premier et le deuxième dispositifs d'entraînement (41, 41', 12, 12') étant réalisés déplaçables l'un par rapport à l'autre au moins dans une direction (y) perpendiculaire à un axe de rotation (x) de l'arbre d'adaptation (10), et suivant un angle (α) par rapport à l'axe de rotation (x),
**caractérisé en ce que**
la première bride (23) est placée sur une première moitié de boîtier (25) et la deuxième bride (24) sur une deuxième moitié de boîtier (26) et les moitiés de boîtier (25, 26) sont reliées entre elles de manière séparable,
**en ce que** les dispositifs (21, 22) destinés à supporter l'arbre d'adaptation sont prévus dans la première moitié de boîtier (25) et
**en ce qu'**un palier (22) est fixé, à travers la deuxième moitié de boîtier (26), dans la première moitié de boîtier (25).

2. Système d'adaptation selon la revendication 1,
**caractérisé en ce que** le premier et le deuxième dispositifs d'entraînement (41, 41', 12, 12') sont réalisés de manière à pouvoir coulisser l'un par rapport à l'autre dans une première direction parallèle à l'axe de rotation (x) de l'arbre d'adaptation.

3. Système d'adaptation selon la revendication 1,
**caractérisé en ce que** l'arbre d'adaptation (10) est supporté par deux paliers (21, 22), de préférence par des paliers de roulement, disposés à distance l'un de l'autre dans la direction de l'axe de rotation (x).

4. Système d'adaptation selon l'une des revendications précédentes,
**caractérisé en ce que** le premier dispositif d'entraînement comprend au moins une rainure (12, 12') avec des parois de rainure (13, 13') qui sont réalisées symétriques par rapport à un plan qui s'étend sensiblement à travers l'axe de rotation (x) et **en ce que** le deuxième dispositif d'entraînement comprend au moins une languette (41, 41') qui peut être insérée dans la ou les rainures (12, 12').

5. Système d'adaptation selon la revendication 4,
**caractérisé en ce que** la ou les languettes (41, 41') sont plus minces que la ou les rainures (12, 12') pour garantir un jeu dans le sens de rotation entre les parois de rainure (13, 13') et la ou les languettes (41, 41').

6. Système d'adaptation selon la revendication 5,
**caractérisé par** une pièce intermédiaire (50) à insérer entre au moins l'une des parois de rainure (13, 13') et la ou les languettes (41, 41').

7. Système d'adaptation selon la revendication 6,
**caractérisé en ce que** la pièce intermédiaire (50) est déformable élastiquement et a des dimensions telles qu'elle force la ou les languettes (41, 41') avec une précontrainte à l'intérieur de la ou des rainures (12, 12').

8. Système d'adaptation selon l'une des revendications 6 ou 7,
**caractérisé en ce que** la pièce intermédiaire (50) est réalisée dans une matière propre à réduire la friction entre les parois de rainure (13; 13') et la ou les languettes (41, 41').

9. Système d'adaptation selon la revendication 1,
**caractérisé en ce qu'**il est prévu un grand nombre de premières et de deuxièmes moitiés de boîtier (25, 26) avec des premières brides (23) différentes les unes des autres et des deuxièmes brides (24) différentes les unes des autres, pour la liaison avec des dispositifs à entraîner différents les uns des autres et/ou des moteurs différents les uns des autres.

10. Système d'adaptation selon la revendication 1,
**caractérisé en ce qu'**il est prévu un grand nombre d'arbres d'adaptation (10) pour la liaison avec des pignons différents les uns des autres et un grand nombre d'éléments d'accouplement (40) pour la liaison avec des arbres moteurs différents les uns des autres.

11. Système d'adaptation selon la revendication 1,
**caractérisé par** un dispositif de transmission du couple de rotation (60, 75, 70) entre l'élément d'accouplement (40) et l'arbre d'adaptation (10) pour la compensation au moins temporaire de vitesses de rotation différentes entre l'arbre moteur du dispositif à entraîner.

12. Système d'adaptation selon la revendication 1,
**caractérisé en ce que** le dispositif de transmission du couple de rotation comprend un accouplement à glissement (60) et/ou un accouplement hydraulique (65) et/ou un accouplement élastique (70).

13. Système d'adaptation selon l'une des revendications 11 ou 12,
**caractérisé en ce que** les dispositifs d'entraînement (41, 41') sont réalisés dans le dispositif de transmission du couple de rotation (60, 65, 70).

14. Système d'adaptation selon l'une des revendications précédentes,
**caractérisé par** un dispositif de blocage (75, 80) disposé dans ou sur le boîtier (80), pour bloquer l'arbre d'adaptation et/ou l'élément d'accouplement (40) dans au moins un sens de rotation.

15. Système d'adaptation selon l'une des revendications précédentes,
**caractérisé en ce que** le boîtier (20) comporte des dispositifs de fixation (85) pour supporter un moteur d'entraînement dans une version à pied et/ou des dispositifs de montage pour la fixation du boîtier (20) sur un socle ou similaire.

16. Système d'adaptation selon l'une des revendications précédentes,
**caractérisé par** des dispositifs d'étanchéité (28) pour rendre étanche l'arbre d'adaptation (10) par rapport au boîtier (20).

17. Système d'adaptation selon la revendication 1,
**caractérisé par** un flasque formant couvercle (26') qui peut être relié, à la place de la deuxième moitié de boîtier (26), à la première moitié de boîtier (25), l'arbre d'adaptation (10) dépassant, par sa deuxième extrémité (14), du flasque formant couvercle, pour qu'on y place une poulie ou élément d'entraînement similaire.

18. Système d'adaptation selon la revendication 17,
**caractérisé par** un dispositif d'étanchéité (28') pour assurer l'étanchéité de l'arbre d'adaptation (10) par rapport au flasque formant couvercle (26').
